(19) Europäisches Patentamt / European Patent Office / Office européen des brevets

(11) **EP 2 064 522 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(21) Anmeldenummer: **07729573.1**

(22) Anmeldetag: **29.05.2007**

(51) Int Cl.:
*G01D 3/032* *(2006.01)*

(86) Internationale Anmeldenummer:
**PCT/EP2007/055150**

(87) Internationale Veröffentlichungsnummer:
**WO 2008/028697 (13.03.2008 Gazette 2008/11)**

(54) **VERFAHREN UND VORRICHTUNG ZUR ÜBERWACHUNG DES RAUSCHENS EINES SENSORS**

METHOD AND DEVICE FOR MONITORING THE NOISE FROM A SENSOR

PROCÉDÉ ET DISPOSITIF DESTINÉ À SURVEILLER LE BRUIT D'UN CAPTEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.09.2006 DE 102006041867**

(43) Veröffentlichungstag der Anmeldung:
**03.06.2009 Patentblatt 2009/23**

(73) Patentinhaber: **Continental Automotive GmbH 30165 Hannover (DE)**

(72) Erfinder:
• **JIANG, Zheng-Yu**
  **93053 Regensburg (DE)**
• **KRETSCHMANN, Matthias**
  **93047 Regensburg (DE)**
• **PREIS, Herbert**
  **93090 Bach a.d. Donau (DE)**

(56) Entgegenhaltungen:
**US-A- 5 764 537**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren und eine Vorrichtung zur Überwachung des Rauschens eines Sensors sowie eine Anwendung eines erfindungsgemäßen Verfahrens im Fahrzeugbereich zum Ermitteln eines Reibwertes zwischen Reifen eines Kraftfahrzeuges und einer Straßenoberfläche.

Aus dem Stand der Technik ist bekannt, dass ein Signal/Rausch-Verhältnis SNR in einem Messsystem bei geringem Bedarf an elektrischer Leistung eingestellt wird. Dabei ist das SNR aber von mehreren Einflussgrößen, wie z.B. Temperatur, Spannung, etc. abhängig. Das wird beispielsweise in der DE 103 18 602 A offenbart. Aus der US 5 764 537 A ist ein sehr ähnliches Verfahren zur Überwachung des Rauschens eines Sensors bekannt.

Es ist Aufgabe der vorliegenden Erfindung, ein preiswertes sowie zuverlässig arbeitendes Verfahren zur Überwachung eines Sensor-Rauschens und eine entsprechende Vorrichtung zu schaffen, um u. a. systemrelevante Informationen zu erhalten.

Diese Aufgabe wird durch die Merkmale der unabhängigen Ansprüche gelöst. Vorteilhafte Weiterbildungen sind Gegenstand der jeweiligen Unteransprüche.

Eine wesentliche Basis der vorliegenden Erfindung ist die Abkehr von einer Betrachtung von Rauschen als reiner Störgröße. Rauschen wird im Rahmen der vorliegenden Erfindung vielmehr als zu nutzende Informationsquelle genutzt. Erfindungsgemäß zeichnet sich ein Verfahren zur Überwachung des Rauschens eines Sensor-Ausgangssignals dadurch aus, dass ein Einfluss spektraler Anteile des Sensorrauschsignals ermittelt und mit Vorgabewerten verglichen wird. Diese Untersuchung wird vorzugsweise auf Basis der Standardabweichung des arithmetischen Mittelwertes durchgeführt.

Eine bevorzugte Ausführungsform der Erfindung zeichnet sich dadurch aus, dass ein Ausgangssignal eines Sensors abgetastet wird, in Gruppen einer Anzahl von Abtastwerten zusammengefasst und einer ersten Art von Mittelwertbildung unterzogen werden, und die Ergebnisse dieser ersten Mittelwertbildung einer zweiten Art von Mittelwertbildung unter Berücksichtigung eines oder mehrerer Nachbar- oder Vorgänger- und/oder Nachfolgewerte unterzogen werden.

Eine erfindungsgemäße Vorrichtung sieht Mittel zur Umsetzung eines Verfahrens vor, indem ein Abtaster mit einem Signalausgang eines Sensors verbunden ist, der Abtaster an einen ersten Zwischenspeicher zur Ablage von Abtastwerten in Reihenfolge ihres Eintreffens angebunden ist, der Zwischenspeicher mit einem Rechenwerk zur Bestimmung eines ersten Mittelwertes verbunden ist, wobei das Rechenwerk hinsichtlich einer Anzahl von Abtastwerten einstellbar ist, ein zweiter Speicher mit einem Ausgang des Rechenwerks zur Ablage von Ergebniswerten in Reihenfolge ihres Eintreffens verbunden ist, und der zweite Speicher an ein zweites Rechenwerk zur Durchführung einer zweiten Art von Mittelwertbestimmung unter Berücksichtigung eines oder mehrerer Nachbar- oder Vorgängerwerte verbunden ist, wobei das zweite Rechenwerk an. einem Ausgang an einen Datenfestspeicher und Vergleichsmittel zur Ausgabe eines Ergebniswertes und/oder einer vergleichenden Ergebnisauswertung angeschlossen ist.

Eine Grundlage für eine besonders vorteilhafte Anwendung eines erfindungsgemäßen Verfahrens bildet die Erkenntnis, dass ein verrauschtes Sensorsignal nicht ausschließlich durch die Sensorqualität bedingt ist. Eine dem Rauschen ähnliche Signaleigenschaft kann beispielsweise durch eine normale Fahrdynamik eines Kraftfahrzeuges, aber auch durch eine spezifische Rauheit der Fahrbahnoberfläche oder aber durch bestimmte anormale Fahrsituationen verursacht werden. Eine Unterscheidung der jeweiligen Einflüsse kann im Frequenzbereich vorgenommen werden, so dass durch die Art und Weise einer Einstellung einer erfindungsgemäßen Signalauswertung der Einfluss einer normalen Fahrdynamik sowie einer regulären Sensorfunktion auf ein Rauschsignal zugunsten einer Untersuchung anormaler Effekte ausgeblendet werden kann. Damit können anhand eines erfindungsgemäßen Verfahrens mit Adaption an den wirtschaftlich sehr bedeutenden Kraftfahrzeugsektor aus einem Sensorsignal Rückschlüsse auf eine aktuelle Beschaffenheit einer Fahrbahnoberfläche gezogen werden. Nach bekannten Verfahren werden dazu beispielsweise ABS-Sensor-Ausgangssignale einer vergleichsweise aufwändigeren sekundären Auswertung zur Ermittlung eines jeweiligen Reibwertes unterzogen. Durch Anwendung eines erfindungsgemäßen Verfahrens wird dagegen ein preiswertes sowie zuverlässig und schnell arbeitendes Verfahren zur Ermittlung einer groben Abschätzung für einen Reibwert zwischen Reifen eines Fahrzeuges und einer Straßenoberfläche sowie eine entsprechende Vorrichtung zur Verfügung gestellt.

Diese Darstellung einer Anwendung eines erfindungsgemäßen Verfahrens und einer entsprechend ausgebildeten Vorrichtung stellt keine generelle Begrenzung deren Anwendung und/oder Anpassbarkeit dar. Vielmehr dient diese Anwendung einer beispielhaften Darstellung einer Ausführungsform der Erfindung zur detaillierteren Beschreibung von Eigenschaften und Vorteilen sowie Anpassungsparametern.

Die vorliegende Erfindung bietet ein Rechenverfahren für eine schnelle und effektive Sensorrauschberechnung und Auswertung unter Verwendung des konvolutionalen Verfahrens. Weitere Merkmale und Vorteile der Erfindung werden nachfolgend unter Beschreibung eines Ausführungsbeispiel mit Bezugnahme auf die Abbildungen der Zeichnung angegeben. In der Zeichnung zeigen:

Figur 1:     ein Diagramm zur Darstellung des Ablaufes eines Rauschüberwachungsverfahrens bei Ausgabe mehrerer Ausgangswerte unterschiedlichen Aussagegehaltes durch Veränderung der Granularität;

Figur 2:    ein Blockdiagramm zur Darstellung eines Überwachungs-Algorithmus eines Sensor-Rauschsignals unter Berücksichtigung einer jeweils aktuellen Fahrzeuggeschwindigkeit;

Figur 3:    ein Blockdiagramm analog der Abbildung von Figur 2 zur Rad-Reibwertuntersuchung mit Nutzung verschiedener Ausgangswerte unterschiedlichen Aussagegehaltes durch Staffelung von Grenz- bzw. Sensorrauschschwellwerten und

Figur 4:    eine graphische Gegenüberstellung von Radreibwerten und Sensorrauschschwellwerten, wie sie dem Ausführungsbeispiel gemäß Figur 3 zugrunde gelegt wird.

Über die verschiedenen Ausführungsbeispiele und Abbildungen hinweg werden einheitlich gleiche Bezugsziffern und Bezeichnungen für gleiche.Funktions- bzw. Baugruppen und Verfahrensschritte verwendet.

Eine Rauschüberwachung kann in einem Kraftfahrzeug u. a. auf die Messwerte einer Gierrate $\omega_z$, einer Längsbeschleunigung $a_x$, einer Querbeschleunigung $a_y$, einzelnen Radgeschwindigkeiten $v_1$, $v_2$, $v_3$, $v_4$ oder weiterer Fahrdynamiksensoren $d_i$ des betreffenden Kraftfahrzeugs mit möglichst unmittelbarem Straßenkontakt aus analogen Sensorausgangssignalen angewendet werden. Prinzipiell läuft das Verfahren bei all diesen Signalen nach einem gleichen Schema ab:

Analoge Eingangsgrößen eines Messwertes werden durch Abtastung fester zeitlicher Schrittbreite $T_a$ bzw. einer Abtastfrequenz $f_a$ zu Reihen diskreter Messpunkte S(i) zu Abtastzeitpunkten i über der Zeitachse umgeformt. Eine derartige Reihe diskreter Messpunkte bzw. Abtastwerte S(i) wird dann in Betrachtungsabschnitte von jeweils $n_w$ Abtastwerten unterteilt, und es wird ein Mittelwert ermittelt, wobei dieser Betrachtungsabschnitt nachfolgend gleich einem Fenster mit einer voreingestellten Breite $n_w$ z.B. in M Schritten der Fensterbreite $n_w$ ist.

In anderen Worten wird zunächst ein Betrachtungsabschnitt diskret einstellbarer zeitlicher Weite in Form eines "Sliding Window" gebildet, in dem alle Werte zur Bildung eines arithmetischen bzw. empirischen Mittelwertes aufaddiert und jeweils durch die Anzahl der aufaddierten Werte geteilt werden. Der Mittelwert über n Zeitschritte zum Zeitpunkt k ergibt sich also zu:

$$\overline{S}_n(k) = \frac{1}{n} \sum_{i=k \cdot n - 1}^{k} S(i)$$

mit
n: Anzahl der Werte S(i) je Fenster bzw. Fenstergröße;
k = 0, 1, 2, .... Laufindex über
eine gesamte Anzahl von zeitdiskreten Messwerten S(k) des abgetasteten analogen Sensorsignals, die in eine gegebene Anzahl abgetasteter Messwerte unterteilt wird.

Die mittlere quadratische Abweichung bzw. Standardabweichung, kurz RMS, über n Zeitschritte zum Zeitpunkt k ergibt sich dann zu:

$$\hat{S}_n(k) = \sqrt{\frac{1}{(n-1)} \left( \sum_{i=k-n+1}^{k} \left[ S(i) - \overline{S}_n(k) \right]^2 \right)}$$

Eine Konvolution über einen Satz verschiedener Granularitäten M ={$M_0$, $M_1$, $M_2$, ... } bei einer Fenstergröße $n_w$ ergibt sich zu:

$$S_{n_w}^{conv}(k) = F(n_w, M, S)$$

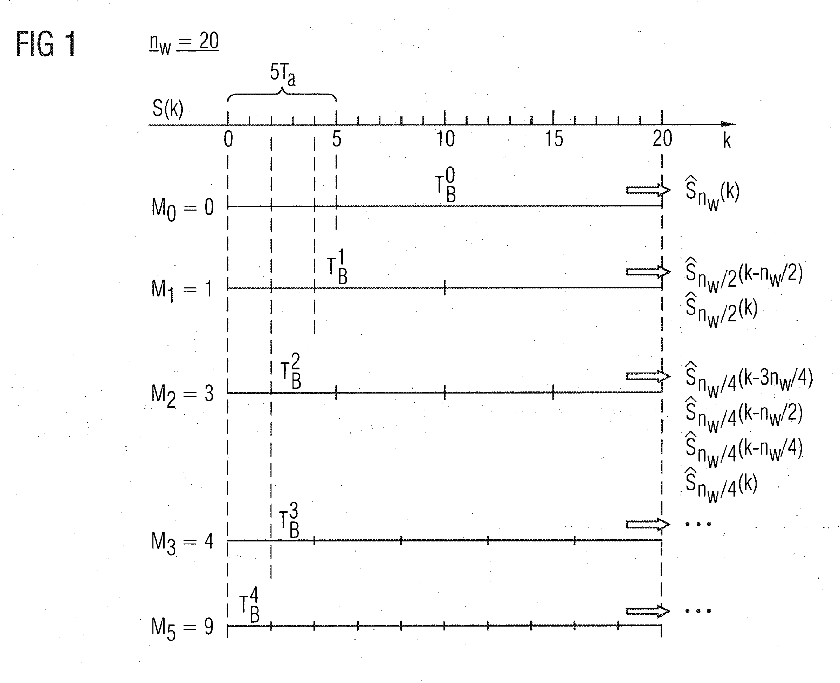

F bezeichnet dabei eine Funktion, die verschiedene RMS $\hat{S}_n(k)$ innerhalb der Signale $S(k-n_w+1)$ und S (k) berechnet und miteinander verknüpft. Durch Wahl von $n_w$ und den jeweiligen Granularitäten M können die beitragenden Frequenzen selektiert werden. Im vorliegenden Beispielfall nach Figur 1 wird mit der Gleichung

$$S_{n_w}^{conv}(k) = \frac{1}{N} \sum_{i=1}^{N} \hat{S}_n(k)$$

eine lineare Addition gewählt. Möglich und im Folgenden nicht weiter dargestellt sind auch andere Formen der Mittelung, Gewichtung oder selektive Betonung bestimmter Frequenzen.

Innerhalb der vorstehenden Formeln definiert eine Fensterbreite bzw. Fenstergröße $n_w$ einen Fokus auf einen jeweiligen Beitrag einer bestimmten zu beobachtenden Frequenz $f_b$ zu einem Endergebnis. Damit existiert eine Grenze zu einer niedrigsten, in die Beobachtung bzw. Berechnung mit einfließende Frequenz $f_b$ über seine Periodendauer $T_b$ nach dem Nyquist-Shannon Abtast-theorem. Diese niedrigste Frequenz berechnet sich zu

$$f_b \geq 1/(2*n_w*T_a).$$

Dieses ist die minimale Frequenz, die über ein Fenster einer Weite $n_w$ über diskrete Messpunkte S(i) des analogen Eingangssignals einstellbar ist. Daraus ergibt sich auch der Zusammenhang, wonach mit steigender Granularität M, d.h. bei zunehmender Zerteilung des Fensters der Weite $n_w$, auch die Beobachtungsfrequenz $f_b$ steigt. Ein analog aufgenommenes Rauschsignal kann damit im Rahmen des vorstehend beschriebenen Verfahrens unter Verarbeitung zeitdiskreter Signale selektiv für die Beiträge bestimmter Beobachtungsfrequenzen auf signifikante Abweichungen z.B. von Normalwerten zu den jeweiligen Beobachtungsfrequenzen hin untersucht werden.

Statt der vorstehend vorgeschlagenen Berechnungsformel für den arithmetischen Mittelwert $\overline{S}_n(k)$ wird nachfolgend eine leicht und vergleichsweise effektiver auf einem Mikrokontroller programmierbare rekursive Formel verwendet:

$$\overline{\eta}_w(k) = \overline{\eta}_w(k-1) + \frac{1}{n_w}\zeta(k),$$

wobei

$$\zeta(k) = \eta(k) - \eta(k-n_w),$$

mit der Fenstergröße $n_w$ und dem Parameter $\eta$ als einem der gemessenen und abgetasteten Signalwerte S(i), i=1, 2, ..., N.

N gibt die Gesamtanzahl der zur Verfügung stehenden Messwerte an. Nach dieser Formel wird also ein Fenster derart über eine Reihe von Abtastwerten geschoben, dass in jedem Schritt ein erster Wert aus dem Fenster herausfällt und ein letzter Wert neu hinzu genommen wird. Eine analoge Vorgehensweise bietet sich auch bei der Bestimmung des RMS-Standardabweichung an.

Die Abbildung von Figur 1 zeigt ein Ausführungsbeispiel anhand einer Anzahl von $n_w$ = 20 Werten der Abtastfolge S(k), die mit einem zeitlichen Abstand $T_a$ = 4 ms aus einem analogen Sensor--Ausgangssignal gewonnen worden sind. Dieser Werte werden nun in einer entsprechenden Vorrichtung 1 in einem Speicher 2 abgelegt und durch Rechenwerke verarbeitet, so dass als Ergebnis in Abhängigkeit von einer jeweils auf die gleiche Datenfolge von $n_w$ = 20 Werten angewendeten Granularität M die folgenden Ergebnisse im Zuge einer abschließenden Bildung eines linearen Mittelwertes ermittelt bei N = 5 werden:

$$S_{20}^{conv}(k) = \frac{1}{5} \sum_{i=1}^{5} \hat{S}^i(k)$$

mit folgenden Einzelwerten:

$$\hat{S}^1(k) = \hat{S}_{n_w}(k)$$

$$\hat{S}^2(k) = \frac{1}{2}(\hat{S}_{10}(k-10) + \hat{S}_{10}(k))$$

$$\hat{S}^3(k) = \frac{1}{4}(\hat{S}_5(k-15) + \hat{S}_5(k-10) + \hat{S}_5(k-5) + \hat{S}_5(k))$$

$$\hat{S}^4(k) = \frac{1}{5}(\hat{S}_4(k-16) + \hat{S}_4(k-12) + \hat{S}_4(k-8) + \hat{S}_4(k-4) + \hat{S}_4(k))$$

$$\hat{S}^5(k) = \frac{1}{10}\sum_{i=0}^{9}\hat{S}_2(k-2i)$$

In den vorstehenden Ergebnissen werden die Beiträge der folgenden fünf Frequenzen selektiert und berücksichtigt:

$$f^1 \sim \frac{1}{T_B^0}$$

$$f^2 \sim \frac{1}{T_B^1}$$

$$f^3 \sim \frac{1}{T_B^2}$$

$$f^4 \sim \frac{1}{T_B^3}$$

$$f^5 \sim \frac{1}{T_B^4}$$

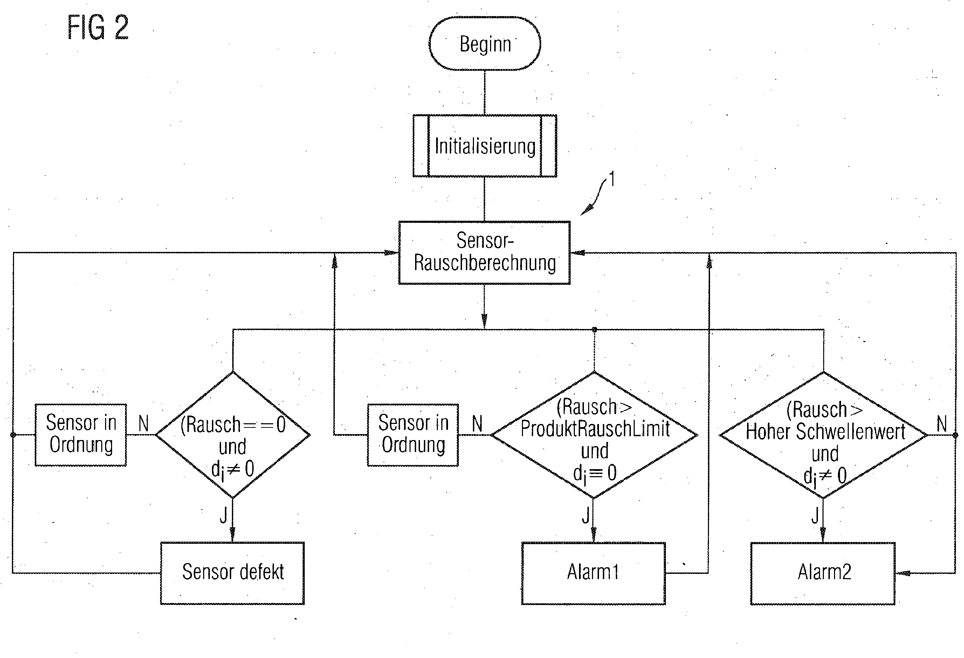

Nun werden Anwendungsbeispiele des vorstehend.beschriebenen Verfahrens für ein Kraftfahrzeug anhand der Abbildungen der Zeichnung beschrieben: Durch die dargestellte Sensorrauschberechnung kann eine Überwachung des Sensorrauschens realisiert werden, das zu einer generellen Funktionsüberwachung eines Sensors herangezogen werden kann. Durch die Einführung von zwei Grenzen in Form von Schwellenwerten wird eine Plausibilisierung der Ergebnisse durchgeführt, die auch eine generelle Funktionsüberwachung des Sensors selber beinhaltet. Figur 2 zeigt exemplarisch eine konkrete Anwendung dieses Verfahrens ein Blockdiagramm zur Veranschaulichung eines Überwachungs-Algorithmus eines Sensor-Rauschsignals $d_i$ unter Berücksichtigung einer jeweils aktuellen Fahrzeuggeschwindigkeit. Hierbei kann jedes Sensorausgangssignal verwendet werden, das einen möglichst unmittelbarem Straßenkontakt in sich trägt.

Nach dem mit Bezug auf die Abbildung von Figur 1 beschriebenen Verfahren bzw. Vorrichtung 1 wird das Sensor-Rauschsignal nun nach der Abtastung untersucht. Dabei sind bei dem angelegten Sensor-Rauschsignal verschiedene Frequenzbereiche zu unterscheiden Normale Fahrzeug-Dynamik beeinflusst einen Bereich zwischen 0 bis ca. 5 Hz. Ziel des nachfolgend beschriebenen Verfahrens ist es, diese Frequenzen durch eine geeignete Wahl von Fenstergröße $n_w$ und Granularität M zu eliminieren.

Eine Erhöhung des Sensorrauschens über einen jeweils gegebenen Produktrausch-Grenzwert kann beispielsweise durch die Alterung des Sensorelements oder durch externe Störungen wie z.B. elektro-magnetische Einstreuungen EMV verursacht werden. Aber auch mechanische Schockanregung oder Signalabriss führen zu einer derartigen Erhöhung oder einer Verringerung. Alarm1 liefert über einen Schellenwertvergleich im Allgemeinen eine Information über die Sensorqualität. Dahingegen bietet Alam2 zusätzliche Information.über unterschiedliche Fahrsituationen bzw. Fahrbahnsituation, wobei der Focus jedoch auf der Größe $\omega_z$ liegt.

Für eine Untersuchung der Beiträge jenseits der normalen Fahrdynamik liegen die zu betrachtenden Frequenzen ab einem Bereich von ca. 5 Hz. Dieser Bereich kann die Auswahl einer angepassten Größe $n_w$ des Sliding-Window und eines Konvolutionsgrads M gemäß der Abtastrate eingestellt werden. Durch einen Vergleich der Größe der jeweiligen Konvolutionswerts mit einem bei der eingestellten Frequenz erhaltenen Ergebnis bei normaler, glatter Straße kann abnormales Sensorrauschen erkannt werden.

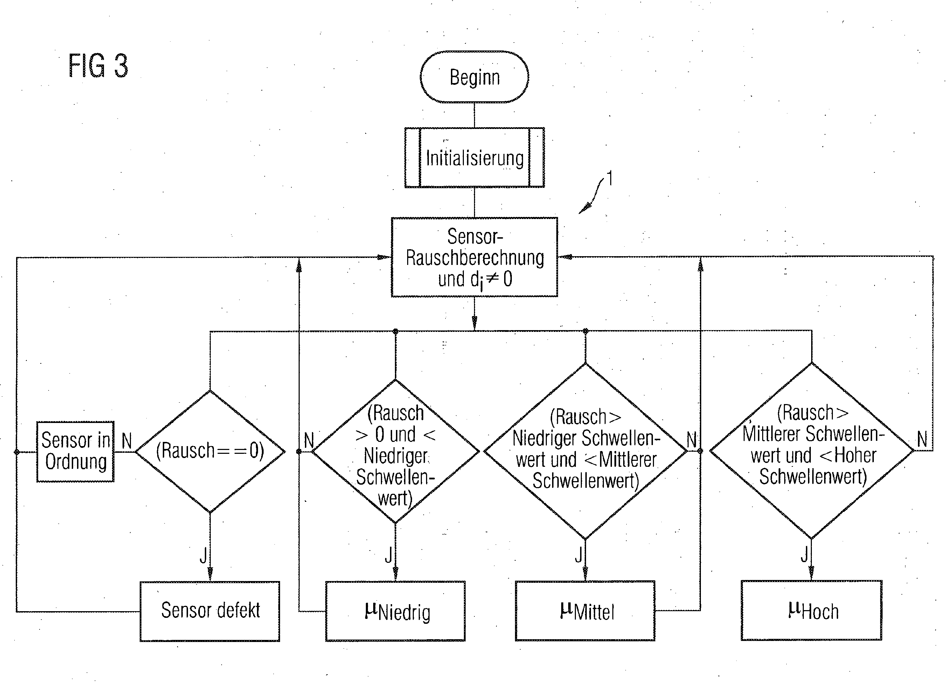

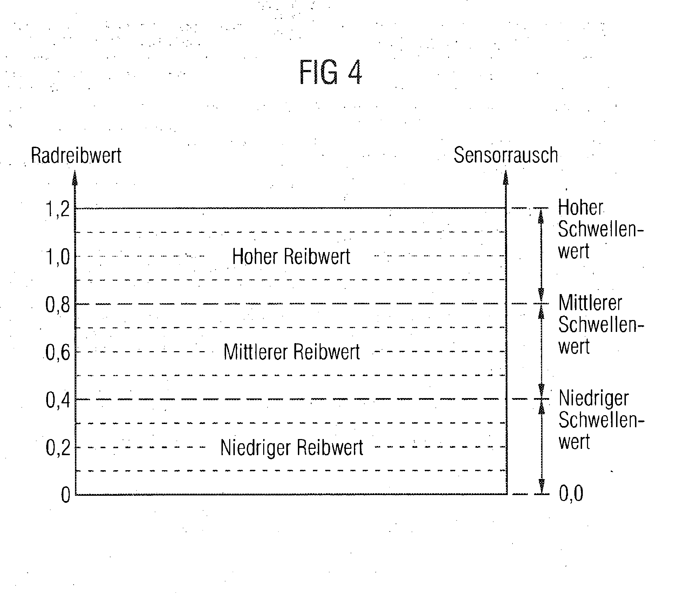

Wie bereits eingangs erwähnt, kann die Eigenschaft eines Sensorrauschens auch durch spezifische Bedingungen der Fahrbahnoberfläche verursacht werden. Versuchsmessungen zeigen einen Zusammenhang zwischen den Schwellenwerten des Sensorrauschens und unterschiedlichen Fahrbahnbedingungen. Diese wiederum beinhalten verschiedene Reibwerte zwischen dem Reifen und der Fahrbahnoberfläche. Figur 3 stellt ein Blockdiagramm zur Rad-Reibwertuntersuchung und Nutzung verschiedener Ausgangswerte unterschiedlichen Aussagegehaltes durch Staffelung von Grenz-bzw. Sensorrauschschwellwerten dar analog der Abbildung von Figur 2. Figur 4 zeigt eine prinzipielle graphische Gegenüberstellung von Radreibwerten und Sensorrauschschwellwerten, wie sie dem Ausführungsbeispiel gemäß Figur 3 zugrunde gelegt wird. Diese Beziehung zwischen einem Radreibwert und dem Sensorrauschschwellenwert sowie deren Auswertung im Rahmen des vorstehend beschriebenen Verfahrens sind nur ein praktisches und auf den Automobilsektor bezogenes Anwendungsbeispiel.

Obiger Abschätzung nach Figur 3 folgend wird schließlich eine frequenzselektive Entscheidung durch Schwellwertevergleiche dazu getroffen, in welchem Intervall ein berechneter Sensorrauschwert liegt. Damit kann die Entscheidung für niedrigen, mittleren oder hohen Reibwert getroffen und an ein Motormanagement und/oder ein Fahrerassistenzsystem weitergegeben werden.

Nach der Ausführungsform von Figur 3 bietet sich damit also auch die Möglichkeit, mit dem Algorithmus den Reibwert zwischen Reifen und Fahrbahn überschlägig abzuschätzen, sofern der Reifendruck vom Sollwert nicht zu stark abweicht. Die exakte Berechnung des Reibwerts für Gleitreibung ist dagegen sehr aufwändig. Er basiert beispielsweise auf komplizierten Reifenmodellen und äußerst anspruchsvollen numerischen Methoden.

Eine sicherere Abschätzung des Radreibwerts kann durch die Kombination der oben genannten Methoden realisiert werden.

Die komvolutionale Methode liefert sehr schnell eine überschlägige Klassifizierung des Reibwerts. Infolgedessen können Start- bzw. Inputparameter für die Berechnung auf Basis aufwändigerer Modelle vorgegeben werden..

## Patentansprüche

1. Verfahren zur Überwachung des Rauschens eines Sensors, wobei ein Einfluss spektraler Anteile des Sensorrauschsignals ermittelt wird und mit Vorgabewerten verglichen wird,
   ein Ausgangssignal eines Sensors abgetastet wird,
   die in Gruppen einer Anzahl ($n_w$) von Abtastwerten (S(i)) zusammengefasst und
   einer ersten Art von Mittelwertbildung ($\overline{S}_n(k)$) unterzogen werden,
   und die Ergebnisse dieser ersten Mittelwertbildung ($\overline{S}_n(k)$) einer zweiten Art von Mittelwertbildung unter Berücksichtigung eines oder mehrerer Nachbar- oder Vorgänger- und/oder Nachfolgerwerte unterzogen werden, **dadurch gekennzeichnet, dass** das Rechenverfahren für die Sensorrauschberechnung und Auswertung ein konvolutionales Verfahren verwendet.

2. Verfahren nach Anspruch 1,
   **dadurch gekennzeichnet, dass** die Untersuchung auf Basis der Standardabweichung des arithmetischen Mittelwertes durchgeführt wird.

3. Verfahren nach Anspruch 1 oder 2,
   **dadurch gekennzeichnet, dass** ein konvolutionales Verfahrens unter Verwendung verschiedener Granularitäten (M) verwendet wird.

4. Verfahren nach einem der vorhergehenden Ansprüche,
   **dadurch gekennzeichnet, dass** Frequenzen oberhalb der normalen Fahrdynamik in die Auswertung einbezogen werden, insbesondere Frequenzen oberhalb von ca. 5 Hz.

5. Vorrichtung zur Überwachung des Rauschens eines Sensors, wobei die Vorrichtung Mittel zur Umsetzung eines Verfahrens aufweist, indem ein Abtaster mit einem Signalausgang eines Sensors verbunden ist,

der Abtaster an einen ersten Zwischenspeicherzur Ablage von Abtastwerten in Reihenfolge ihres Eintreffens angebunden ist, der Zwischenspeicher mit einem Rechenwerk zur Bestimmung eines ersten Mittelwertes ($\overline{S}_n(k)$) verbunden ist, wobei

das Rechenwerk hinsichtlich einer Anzahl von zu verarbeitenden Abtastwerten (S(i)) bzw. Fensterbreite ($n_w$) einstellbar ist,

ein zweiter Speicher mit einem Ausgang des Rechenwerks zur Ablage von Ergebniswerten in Reihenfolge ihres Eintreffens verbunden ist, und

der zweite Speicher an ein zweites Rechenwerk zur Durchführung einer zweiten Art von Mittelwertbestimmung unter Berücksichtigung eines oder mehrerer Nachbar- oder Vorgänger- und/oder Nachfolgewerte verbunden ist, **dadurch gekennzeichnet, dass**

die Vorrichtung ein Konvolutionsrechenwerk umfasst mit einem Eingang zur Vorgabe verschiedener Granularitäten (M).

**6.** Vorrichtung nach einem der beiden vorhergehenden Ansprüche, **dadurch gekennzeichnet, dass** ein Ausgang zur Ausgabe eines Ergebniswertes und/oder einer vergleichenden Ergebnisauswertung an Vergleichsmittel und einen Vergleichswerte enthaltenen Datenfestspeicher angeschlossen ist.

**7.** Verwendung eines Verfahrens nach einem oder mehreren der vorhergehenden Ansprüche,
**dadurch gekennzeichnet, dass** aus einem Ausgangssignal durch Vergleich mit vordefinierten Grenzwerten auf einen jeweils aktuellen Reibwert einer Straßenoberfläche rückgeschlossen wird.


### Claims

**1.** Method for monitoring the noise from a sensor, an influence of spectral components of the sensor noise signal being determined and compared with preset values, there being scanned an output signal of a sensor which is summed up in groups of a number ($n_w$) of sample values (S(i)) and is subjected to a first type of averaging ($\overline{\mathbf{S}}_\mathbf{n}\mathbf{(k)}$), and the results of said first averaging ($\overline{\mathbf{S}}_\mathbf{n}\mathbf{(k)}$) are subjected to a second type of averaging, which considers one or more neighbouring or preceding and/or subsequent values, **characterized in that** the calculation method to compute and evaluate the sensor noise uses a convolution method.

**2.** Method according to Claim 1, **characterized in that** the examination is performed on the basis of the standard deviation of the arithmetic mean.

**3.** Method according to Claim 1 or 2, **characterized in that** use is made of a convolution method employing different granularities (M).

**4.** Method according to one of the preceding claims, **characterized in that** frequencies above the normal vehicle movement dynamics are included in the evaluation, in particular frequencies above approximately 5 Hz.

**5.** Device for monitoring the noise from a sensor, the device having means for implementing a method by connecting a sample to a signal output of a sensor, the sampler being connected to a first buffer for storing sample values in the sequence of their arrival, the buffer being connected to an arithmetic unit for determining a first mean value ($\overline{\mathbf{S}}_\mathbf{n}\mathbf{(k)}$), it being possible to set the arithmetic unit with regard to a number of sample values (S(i)) to be processed, and/or with regard to window width ($n_w$), a second memory being connected to an output of the arithmetic unit for storing result values in the sequence of their arrival, and the second memory being connected to a second arithmetic unit for carrying out a second type of averaging, which considers one or more neighbouring or preceding and/or subsequent values, **characterized in that** the device comprises a convolution arithmetic unit with an input for presetting various granularities (M).

**6.** Device according to one of the two preceding claims, **characterized in that** an output for outputting a result value and/or a comparative result evaluation is connected to means of comparison, and to a data read-only store containing comparison values.

**7.** Use of a method according to one or more of the preceding claims, **characterized in that** a respective current friction coefficient of a road surface is deduced from an output signal by comparison with predefined limit values.

**Revendications**

1. Procédé de surveillance du bruit d'un capteur, une influence des fractions spectrales du signal de bruit de capteur étant calculée et comparée à des valeurs préconisées ;
un signal de sortie d'un capteur étant palpé englobant les valeurs en groupes d'un nombre ($n_w$) de valeurs de palpation (S(i)) ; et
un premier type de formation de valeur moyenne ($\overline{S}_n(k)$) étant soumis ; et
les résultats de cette première formation de valeur moyenne ($S_n(k)$) étant soumis à un deuxième type de formation de valeur moyenne en tenant compte d'une ou de plusieurs valeurs connexes ou précédentes ou postérieures ;
**caractérisé en ce que** le procédé de calcul utilise un procédé convolutionnel pour le calcul de bruit de capteur et l'analyse.

2. Procédé selon la revendication 1, **caractérisé en ce que** la recherche s'effectue sur la base de l'écart standard de la valeur moyenne arithmétique.

3. Procédé selon la revendication 1 ou 2, **caractérisé en ce qu'**un procédé convolutionnel est utilisé par le biais de l'utilisation de différentes granularités (M).

4. Procédé selon l'une quelconque des revendications précédentes, **caractérisé en ce que** les fréquences supérieures à la dynamique de conduite normale sont intégrées dans l'analyse, notamment les fréquences supérieures à environ 5 Hz.

5. Dispositif de surveillance du bruit d'un capteur, le dispositif comportant des moyens de conversion du procédé en reliant un bouton-poussoir à une sortie de signal d'un capteur ;
le bouton-poussoir est raccordé à une première mémoire intermédiaire servant à mémoriser des valeurs de palpation successivement en fonction de leur ordre d'incidence, la mémoire intermédiaire étant reliée à un organe de calcul pour déterminer une première valeur moyenne ($\overline{S}_n(k)$) ;
l'organe de calcul peut être réglé par rapport à un nombre de valeurs de palpation (S(i)) à traiter et/ou à la largeur de fenêtre ($n_w$) ;
une deuxième mémoire est reliée à une sortie de l'organe de calcul pour mémoriser des valeurs de résultat successivement en fonction de leur ordre d'incidence ; et
la deuxième mémoire est reliée à un deuxième organe de calcul pour la mise en oeuvre d'un deuxième type de détermination de valeur moyenne en tenant compte d'une ou de plusieurs valeurs connexes ou précédentes ou postérieures ;
**caractérisé en ce que** le dispositif comprend un organe de calcul de convolution avec une entrée permettant d'entrer au préalable différentes granularités (M).

6. Dispositif selon l'une quelconque des deux revendications précédentes, **caractérisé en ce qu'**une sortie est raccordée à des moyens de comparaison et à une mémoire permanente contenant les valeurs de comparaison pour l'envoi d'une valeur de résultat et/ou d'une analyse comparative de résultat.

7. Utilisation d'un procédé selon l'une quelconque des revendications précédentes ou plusieurs d'entre elles, **caractérisé en ce que** l'on revient à un signal de sortie par comparaison avec les valeurs limites prédéfinies sur une valeur de frottement respectivement actuelle d'une surface de route.

FIG 1

EP 2 064 522 B1

# FIG 2

Flowchart:

- **Beginn**
- **Initialisierung**
- **Sensor-Rauschberechnung** (1)

Branches:

- **Sensor in Ordnung** — N — $(Rausch == 0$ und $d_i \neq 0)$ — J — **Sensor defekt**
- **Sensor in Ordnung** — N — $(Rausch > ProduktRauschLimit$ und $d_i \equiv 0)$ — J — **Alarm1**
- $(Rausch > Hoher\ Schwellenwert$ und $d_i \neq 0)$ — N — J — **Alarm2**

EP 2 064 522 B1

EP 2 064 522 B1

FIG 3

```
                                    ┌──────────┐
                                    │  Beginn  │
                                    └────┬─────┘
                                  ┌──────┴───────┐
                                  │Initialisierung│
                                  └──────┬───────┘
                                                          ↗1
                                  ┌──────────────┐
                                  │    Sensor-   │
                                  │Rauschberechnung│
                                  │   und dᵢ ≠ 0 │
                                  └──────┬───────┘
```

$d_i \neq 0$

|  | Sensor in Ordnung | N | (Rausch==0) | N | (Rausch > 0 und < Niedriger Schwellenwert) | N | (Rausch > Niedriger Schwellenwert und <Mittlerer Schwellenwert) | N | (Rausch > Mittlerer Schwellenwert und <Hoher Schwellenwert) | N |

J

| Sensor defekt | μNiedrig | μMittel | μHoch |

## FIG 4

Radreibwert

Sensorrausch

| 1,2 | | | — | Hoher Schwellen-wert |
| 1,0 | Hoher Reibwert | | | |
| 0,8 | | | — | Mittlerer Schwellen-wert |
| 0,6 | Mittlerer Reibwert | | | |
| 0,4 | | | — | Niedriger Schwellen-wert |
| 0,2 | Niedriger Reibwert | | | |
| 0 | | | — | 0,0 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10318602 A

- US 5764537 A